(19) **Europäisches Patentamt / European Patent Office / Office européen des brevets**

(11) **EP 3 716 270 B1**

(12) **EUROPEAN PATENT SPECIFICATION**

(45) Date of publication and mention of the grant of the patent:
**06.04.2022 Bulletin 2022/14**

(51) International Patent Classification (IPC):
**G10L 21/0208** (2013.01)   **G06N 3/04** (2006.01)
**G10L 25/30** (2013.01)   **G06N 3/08** (2006.01)

(21) Application number: **19166398.8**

(22) Date of filing: **29.03.2019**

(52) Cooperative Patent Classification (CPC):
**G10L 21/0208; G06N 3/0445; G06N 3/0454; G06N 3/084; G10L 25/30**

(54) **SPEECH PROCESSING SYSTEM AND METHOD THEREFOR**

SPRACHVERARBEITUNGSSYSTEM UND VERFAHREN DAFÜR

SYSTÈME DE TRAITEMENT DE LA PAROLE ET PROCÉDÉ ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**30.09.2020 Bulletin 2020/40**

(73) Proprietor: **Goodix Technology (HK) Company Limited**
**Hong Kong (CN)**

(72) Inventors:
- **Strake, Maximilian**
  **38106 Braunschweig (DE)**
- **Tirry, Wouter Joos**
  **Redhill, Surrey RH1 1QZ (GB)**
- **Defraene, Bruno Gabriel Paul G**
  **Redhill, Surrey RH1 1QZ (GB)**
- **Fingscheidt, TIM**
  **Braunschweig (DE)**

(74) Representative: **González Peces, Gustavo Adolfo**
**Herrero & Asociados, S.L.**
**Cedaceros, 1**
**28014 Madrid (ES)**

(56) References cited:
- **HONGXIAO YANG ET AL: "Low-SNR speech enhancement in driving environment", 2016 16TH INTERNATIONAL SYMPOSIUM ON COMMUNICATIONS AND INFORMATION TECHNOLOGIES (ISCIT), IEEE, 26 September 2016 (2016-09-26), pages 151-155, XP033002251, DOI: 10.1109/ISCIT.2016.7751611 [retrieved on 2016-11-21]**
- **QING WANG ET AL: "A Multiobjective Learning and Ensembling Approach to High-Performance Speech Enhancement With Compact Neural Network Architectures", IEEE/ACM TRANSACTIONS ON AUDIO, SPEECH, AND LANGUAGE PROCESSING, IEEE, USA, vol. 26, no. 7, 1 July 2018 (2018-07-01), pages 1181-1193, XP058408882, ISSN: 2329-9290, DOI: 10.1109/TASLP.2018.2817798**
- **YONG XU ET AL: "A Regression Approach to Speech Enhancement Based on Deep Neural Networks", IEEE/ACM TRANSACTIONS ON AUDIO, SPEECH, AND LANGUAGE PROCESSING, vol. 23, no. 1, 1 January 2015 (2015-01-01), pages 7-19, XP055567335, USA ISSN: 2329-9290, DOI: 10.1109/TASLP.2014.2364452**
- **Melisha Dsouza: "Exploring Deep Learning Architectures [Tutorial] | Packt Hub", , 25 October 2018 (2018-10-25), XP055622557, Retrieved from the Internet: URL:https://hub.packtpub.com/exploring-dee p-learning-architectures-tutorial/ [retrieved on 2019-09-16]**
- **SE RIM PARK ET AL: "A Fully Convolutional Neural Network for Speech Enhancement", ARXIV.ORG, CORNELL UNIVERSITY LIBRARY, 201 OLIN LIBRARY CORNELL UNIVERSITY ITHACA, NY 14853, 22 September 2016 (2016-09-22), XP080813105,**

**Description**

Field of the invention

The field of the invention relates to a speech processing system and a method therefor. In particular, the field of the invention relates to a neural network-based speech enhancement technique.

Background of the invention

In some speech enhancement tasks, neural network models are able to achieve a strong attenuation of acoustic interference, such as noise, reverberation or acoustic echo. A neural network is regarded as a computing system that is made up of a number of simple, highly interconnected processing circuits or elements, which process information based on their dynamic state in response to external inputs. In some instances, the processed information is based on an internal dynamic state that crosses all layers of a neural network. In some instances, for recurrent neural networks, the processed information based on a dynamic state relates to an internal state of the neural network over different time steps. Most speech-based system designers aim to improve the speech quality whilst attempting to maintain high interference attenuation. Classical interference suppression algorithms often suffer from a strong dependency of interference attenuation on the actual interference instance (e.g. different noise types), whilst state-of-the-art neural-network-based systems show a similar dependency regarding speech distortions.

These state-of-the art systems typically learn a direct mapping from the degraded speech (e.g. clean speech plus acoustic interference) to the clean speech domain. Alternatively, these state-of-the art systems may estimate time-frequency (T-F) masks, in order to separate the clean speech signal from interferences. Such methods, aiming at a strong attenuation of interferences, suffer from audible distortions of the speech component as well as temporal discontinuities or distortions in the residual interference component.

A post-processing method, which uses a convolutional neural network (CNN) network topology and is purely for the enhancement of 'transcoded' speech, is proposed by the authors Ziyue Zhao, Huijun Liu, and Tim Fingscheidt, in the papers titled:
"Convolutional Neural Networks to Enhance Coded Speech" and "Neural-Network-based Postprocessing for the Enhancement of Transcoded Speech", arXiv preprint arXiv.-1806.09411, 2018. The techniques proposed in these papers stipulate a single stage of neural network processing that is used for speech enhancement of transcoded signals, and is specifically designed to reduce quantization noise introduced by media encoding/decoding and transmission of speech signals.

Zhao, Yan, Zhong-Qiu Wang, and DeLiang Wang, in their paper titled "A two-stage algorithm for noisy and reverberant speech enhancement", published in the Proc. of ICASSP, 2017, identify two neural network stages, each targeting specific interferences, i.e. de-noising and de-reverberation. However, the system proposed in this paper is incompatible with tasks requiring low delay, because of the usage of the iterative Griffin-Lim algorithm for time signal reconstruction and the usage of context from subsequent frames for input feature generation for the second stage network.

HONGXIAO YANG ET AL: "Low-SNR speech enhancement in driving environment", 2016 16TH INTERNATIONAL SYMPOSIUM ON COMMUNICATIONS ANO INFORMATION TECHNOLOGIES (ISCIT) discloses a type of two-stage neural network speech enhancement algorithm. First, the feature vector of noisy signals is used to training BP network and RBF network. And then, the BP and RBF networks are merged for denoising model.

SE RIM PARK ET AL: "A Fully Convolutional Neural Network for Speech Enhancement" discloses a fully Convolutional Neural Networks, which consist of lesser number of parameters than fully connected networks. The proposed network, Redundant Convolutional Encoder Decoder (R-CED), demonstrates that a convolutional network can be 12 times smaller than a recurrent network and yet achieves better performance, which shows its applicability for an embedded system.

The inventors of the present invention have identified a need for an improved speech system, for example by acoustic interference suppression with an ability to restore natural sounding speech.

Summary of the invention

The present invention provides a speech processing system and a method therefor, together with a computer program product, as described in the accompanying claims.

Specific embodiments of the invention are set forth in the dependent claims.

These and other aspects of the invention will be apparent from and elucidated with reference to the embodiments described hereinafter.

Brief description of the drawings

Further details, aspects and embodiments of the invention will be described, by way of example only, with reference to the drawings. In the drawings, like reference numbers are used to identify like or functionally similar elements. Elements in the figures are illustrated for simplicity and clarity and have not necessarily been drawn to scale.

FIG. 1 schematically illustrates a block diagram of a speech processing system that includes a neural network-based two-stage speech enhancement according to an example of the present invention.

FIG. 2 schematically illustrates a simplified diagram of an example speech processing system, together with some example pre-processing steps before acquiring the input signal, according to some examples of the present invention.

FIG. 3 schematically illustrates a block diagram of separate training schemes for acoustic interference suppression and speech restoration neural networks, according to an example of the present invention.

FIG. 4 schematically illustrates a block diagram of a joint neural network training scheme, according to some examples of the present invention.

FIG. 5 illustrates a flowchart of an example of a topology for an acoustic background interference suppression first stage neural network, in accordance with the invention.

FIG. 6 illustrates a flowchart of an example of an encoder-decoder topology for a speech restoration second stage neural network, not forming part of the invention.

FIG. 7 illustrates a flowchart of an encoder-decoder topology for a second stage neural network, which can be employed to restore at least one speech component and that includes a convolutional LSTM bottleneck layer, in accordance with the invention.

Detailed description

Examples of the invention aim to address the abovementioned problems with known speech processing systems by provision of a neural-network-based approach that uses two distinct processing stages, namely a first neural network circuit (or stage) that is configured for acoustic interference suppression and a second neural network circuit (or stage) that is configured for restoration of a natural sounding speech signal. Examples of the invention employ specific neural network topologies for these two successive tasks to be able to obtain a strong acoustic interference suppression, advantageously even in highly non-stationary and/or poor speech-to-interference ratio acoustic conditions, whilst still maintaining a high-quality speech signal. For example, non-stationary noises exhibit dynamic spectral characteristics over time, as opposed to stationary noises, which have a more stable/static spectral characteristic over time. An example of the former are impulsive noises (e.g. slamming door, rattling dishes), while an example of the latter are vehicle noises (car, train).

Advantageously, examples of the neural-network-based approach for speech enhancement described herein, that use two distinct processing stages, reduce the known design dependency of targeting attenuation of a specific interference. This is achieved by targeting very high acoustic interference attenuation in the first neural network circuit (or stage). Notably, in accordance with examples of the invention, any residual acoustic interference may be alleviated by the second neural-network speech restoration stage.

In some examples, this enables the second neural network circuit (or stage) to be configured to generalize well to different interference instances (e.g. acoustic interference), in terms of speech restoration and residual acoustic interference suppression, e.g. any residual acoustic interference exhibited in the signal passed to the second neural network circuit (or stage) following acoustic background interference suppression performed by the first neural network circuit.

Thus, a speech processing system is described that comprises: an input that receives an input speech signal that comprises clean speech and acoustic interference. A first neural network circuit is configured to suppress the acoustic interference in the input speech signal and output a representation of an estimate of a clean speech signal. A second neural network circuit is configured to receive the representation of the estimated clean speech signal and restore speech components of the clean speech in the input speech signal, and suppress any residual acoustic interference, and output a reconstructed speech signal.

Further, in some examples of the invention, a joint training of both neural network circuits (or stages) is proposed, in order to refine the performance of the total speech processing system. In some examples, joint training (and potentially additional pre-training) may be employed to configure the first neural network circuit (or stage) in order to generate well-suited inputs for the second neural network stage, which is simultaneously further adapted to estimate natural sounding speech. In these examples, the training of the speech processing system is such that the neural network circuit adaptively learns rules for acoustic interference suppression by using a large specific data set. In examples of the invention, an algorithm employed for training is focused on learning and iteratively adapting weights and biases of the neural networks to perform background acoustic interference suppression and speech restoration respectively.

Thus, examples of the invention describes an approach that decouples processing into two stages, each of which can focus on one task, i.e. a first stage configured to suppress acoustic interference, and a second stage configured to restore speech, improve speech quality/naturalness. Furthermore, the outputs of the first stage are configured to be well suited as inputs to the second stage, because most of the acoustic interference has been suppressed, which allows the second stage to focus on speech quality restoration.

Although example embodiments of the invention are designed for acoustic interference suppression in speech signals, in a first neural network circuit (or stage) of a two-stage neural network system, it is envisaged that the concepts described herein may be equally employed for other types of interference, by adapting the first neural network stage to the specific interference suppression role. This is distinct from the cited art that uses a single neural network that is trained to suppress quantization distortion and noise of transcoded signals introduced by encoding and decoding operations and/or distortion due to digital signal processing.

Furthermore, although the example embodiments of neural network circuits (or stages) propose to use estimators based on real-valued neural networks in both stages, it is envisaged that in other examples that complex-valued neural networks or a combination of any kind of neural network may be employed in the two-stage approach described herein, including classical interference suppression or speech restoration approaches.

Thus, examples of the present invention may be targeted for both (or either) of real-valued networks and complex-valued networks. In a complex-valued network, all operations carried out as part of the neural network are defined as operations on complex numbers, so that especially the trainable parameters may be complex-valued and the loss function for (separate or joint) network training may be defined using complex-valued operations..

In contrast, in a real-valued neural network, all internal mathematical operations are assumed to be operating on real-valued variables. In examples of the invention, when using a combination of a two-stage neural network design and conventional digital speech processing approaches to interference suppression and/or speech restoration, the conventional approach has to be implementable as a number of operations with well-defined derivatives for backpropagation training of the system combination.

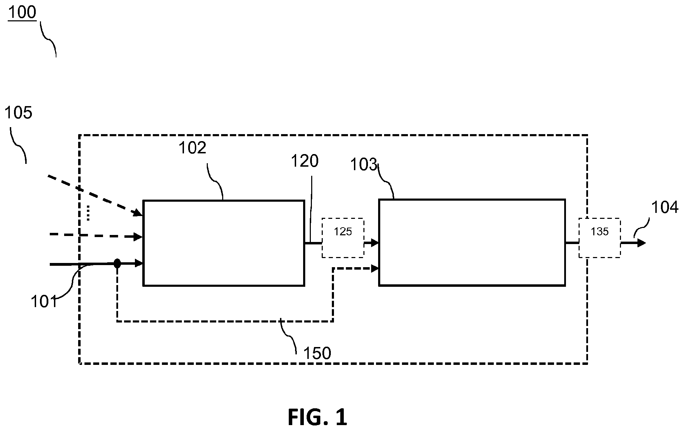

Referring now to FIG. 1, a schematic block diagram of a two-stage neural network-based speech enhancement circuit 100 is illustrated, according to an example of the present invention. In accordance with examples of the invention, the two-stage approach for speech enhancement uses neural network models in both processing stages. A first neural network circuit (or stage) 102 is configured to suppress acoustic interference in a degraded input speech signal 101, which in some instances is configured for suppression of acoustic background interference. In accordance with examples of the invention the first neural network circuit 102 of the two-stage neural network system can be trained to suppress any acoustic background interference. In some examples, the first neural network circuit (or stage) 102 may optionally receive one or more auxiliary input signals 105, e.g. additional microphone signals or acoustic interference estimate signals, which may be utilised by the first neural network circuit (or stage) 102 to better suppress the targeted acoustic interference.

In accordance with examples of the invention, the second neural network circuit (or stage) 103 is configured to restore natural sounding speech. In some examples, the second neural network circuit (or stage) 103 may also be configured to potentially suppress residual acoustic interferences emanating from the output 120 of the first neural network circuit (or stage) 102.

The second neural network circuit 103 is configured to restore one or more speech components of the clean speech signal. Some examples of speech components that are relevant to the speech quality and intelligibility include the following: pitch frequency, pitch harmonic structure, formant structure, spectral envelope, spectral phase. Pitch is the fundamental frequency of vibration of the vocal folds, and the pitch frequency is a measure of how high or low the frequency of a person's voice sounds. The perception of voiced sounds relies heavily on the presence of the clean speech pitch frequency and pitch harmonics, i.e. integer multiples of the pitch frequency. Formants are concentrations of acoustic energy around a particular frequency in the speech wave, and occur around frequencies that correspond to the resonances of the vocal tract. The spectral envelope is the envelope curve of the amplitude spectrum. Next to the spectral amplitudes, it should be noted that also the spectral phase is important to the perceived speech quality. Thus, in examples of the invention, the second neural network circuit 103 is configured to restore at least one speech component, which in the context of some examples of the invention may encompass restoring one or more of the above.

In some optional examples, the second neural network circuit (or stage) 103, configured for speech restoration, may be configured to additionally use the degraded input speech signal 101 as an additional input 150 for estimating an enhanced speech signal 104 to be output from the two-stage neural network-based speech enhancement circuit 100.

In some optional examples of the invention, a neural network training system is also described, whereby the two-stage neural networks may be first trained separately and then the neural network training system successively performs a joint training of a combination of the neural network circuits (or stages) 102, 103. In some optional examples, the joint training may be performed using a single loss function at the output 104 of the two-stage system or using a combined loss function 125, 135. In some optional examples, the joint training may additionally include an intermediate loss 125 introduced at the output 120 of the acoustic interference suppression first neural network circuit (or stage) 102.

In a joint training scheme approach, where a loss function 125 is applied to an output of the first neural network circuit (or stage) 102 and a further loss function 135 applied to an output 104 of the second neural network circuit (or stage) 103, two loss functions 125, 135 that contribute to parameter updates in the neural network can be advantageously achieved. In examples of the invention, the use of an intermediate loss function enables the speech system designer to have control about the goals of the neural network scheme at intermediate points. In this two loss function example, the speech system designer is able to employ a loss function that favours very aggressive acoustic interference suppression in the first stage. It is envisaged that in other examples, the speech system designer may be able to employ a loss function that favours lower acoustic interference suppression in a first stage, if the acoustic interference was determined as not being excessive. Thus, in some optional examples, it is envisaged that joint training of both neural network stages may be performed with or without an intermediate loss function 125 being introduced, and in some instances without performing separate training of each neural network stage beforehand.

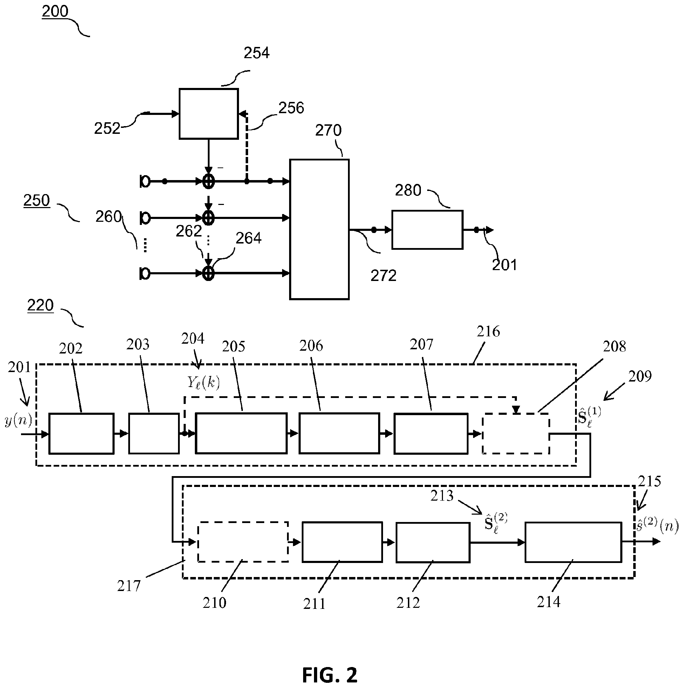

Referring now to FIG. 2, a simplified diagram of an example processing scheme, together with some example signal pre-processing circuits that may be configured to generate the input signal, is illustrated, according to some examples of the invention. First, FIG. 2 illustrates an example of a pre-processing system 250 that includes some potential pre-processing circuits, each of which typically remove interference, leaving residual acoustic interference in their respective output signals and each of which may be validly selected to provide the input signal to the two neural network circuit (or stages) 220, according to some examples of the invention. For example, the pre-processing system 250 may generate an input signal y(n) 201 for the two neural network circuit (or stages) 220 that contains a mixture of speech and interference, which may be a digitized microphone signal 260 or an output of a pre-processing operation. Thus, the two-stage neural network design example of the invention may be included to suppress unwanted acoustic background interference in the processed speech signal even after a conventional acoustic interference suppression circuit, such as an acoustic echo canceller.

In this example, a mixture of speech and residual acoustic interference is contained within one or more digitized microphone signal(s) 260, input to an acoustic echo cancellation circuit that comprises an echo estimation circuit 254, as well as a subtraction junction 264 that is arranged to subtract an acoustic echo estimate signal 262, in response to an input far-end signal 252 and a sampled output 256 of the summing junction(s) 264. The signal resulting from the subtraction of the echo estimate provides the input of the two-neural-network circuit.

In other examples, the pre-processing system 250 may generate a beamformer output signal 272, output from a beamforming circuit 270 that may also be used as an input of the two-neural-network circuit. Similarly a de-reverberation signal output from a de-reverberation circuit 280, may also be used as an input of the two-neural-network circuit, as such example circuits that typically remove interference, leaving residual acoustic interference in their respective output signals. They are configured to provide a signal with reduced interference. In this manner, the pre-processing system 250 may provide one or a combination of the aforementioned signals (i.e. speech and unwanted residual acoustic background interference) to the input of the two neural network circuit (or stages) 220.

In accordance with examples of the invention, the two neural network stage system 220 is described with reference to a first acoustic interference suppression circuit (e.g. a first stage) 216, followed by a second speech restoration circuit (e.g. a second stage) 217. The two neural network circuits are described with reference to an input signal y(n) 201 that is input to a framing circuit 202 of the first acoustic interference suppression circuit (e.g. stage) 216 and processed in frames of 32msec., for example, with a frame shift of 50%, i.e. 16msec. It is envisaged that in other example implementations that other frame lengths may be employed, as well as other frame shifts, such as 25%. In this example, each frame with frame index $\ell$ is subjected to a square root Hann window and subsequently transformed into the frequency domain via Fast Fourier Transform (FFT) 203 of size $K$. It is envisaged that in other example implementations that other windowing techniques may be employed, such as a non-square-root or hamming window.

The resulting signal 204 in the first acoustic interference suppression circuit (e.g. stage) 216, output from FFT 203 forms a basis for feature extraction. In this example, the feature extraction operations are performed by a feature extraction circuit 205 and a mean and variance normalization circuit 206.

It is envisaged that some features that may be extracted by feature extraction circuit 205, may include spectral magnitudes, real and imaginary parts of the audio spectrum, mel-frequency-based spectral magnitudes, etc. In some examples, for the computation and extraction of spectral features, a frequency domain transformation (e.g. by FFT 203) may be applied, which decomposes a time domain signal into its constituent frequency components. Example frequency domain transformations include a Discrete Fourier Transform, which results in complex spectral components (consisting of both real and imaginary parts), and the related Discrete Cosine Transform, which results in purely real spectral components. In some examples, these spectral features can be further transformed into spectral magnitudes by taking the Euclidean norm of the spectral components. In speech processing applications, a commonly derived feature from the spectral magnitudes is the mel-frequency cepstrum, where the spectral magnitudes are mapped to the mel-scale using triangular overlapping windows. The mel-scale is a logarithmic scale, which was found to match well the human perception of sounds.

It is envisaged that, in other example implementations, a single mean normalisation may be employed. Each of these optional circuits is employed before the first neural network circuit (or stage) 207 configured for acoustic background interference suppression. In some examples, the feature extraction circuit 205 may include a concatenation of neighbouring frames, using features from previous and/or future frames. Such a concatenation is not obligatory and in some examples the feature extraction circuit 205 may alternatively be configured to operate on features based only on the current frame.

In some examples, the first neural network circuit (or stage) 207 may be trained to estimate T-F masks, which in some examples may subsequently be multiplied with a matching representation of a frequency domain mixture signal 204 obtained from an output of the FFT 203. Such a frequency domain mixture signal 204 may be applied by a masking circuit 208, to an output of the first neural network circuit (or stage) 207 in order to obtain a frequency domain vector representation of the estimated clean speech signal 209. The frequency domain vector representation of the estimated clean speech signal 209 may consist of spectral magnitudes, or a concatenation of real and imaginary parts of the complex spectral bins, or mel-frequency-based spectral magnitudes. In some examples, it is envisaged that it may be possible to directly estimate the clean speech signal 209, in contrast to applying the output of the first neural network circuit (or stage) 207 to a masking circuit 208. However, the use of a masking circuit 208, in some applications, provides an advantage of preventing the first neural network circuit 207 from being forced to estimate absolute signal levels of the speech.

The frequency domain vector representation of the estimated clean speech signal 209 is input to the second speech restoration stage 217. The input frequency domain vector representation for the second speech restoration stage 217 may be subject to an optional second feature extraction in a second feature extraction circuit 210, which generates features in the processing domain of the second neural network circuit (or stage) 212, e.g. frequency, time or cepstral domain. In some preferred examples, the second neural network stage 217 may not use a second feature extraction circuit 210 and instead enable a second neural network circuit (or stage) 212 to operate directly on the frequency domain vector representation of the estimated clean (acoustic interference suppressed) speech 209, which is first applied to a second mean and variance normalization circuit 211. In this manner, it is possible to deliver features that are more suited for learning the second stage neural network. It is envisaged, one example may be to extract spectral features with a higher resolution for the second stage, in order to focus on bringing back spectral details in the estimated clean speech. Furthermore, it is envisaged that in another scenario, where computational complexity is a concern, it may be possible to use a second feature extraction reducing the feature dimension and therefore enabling the use of a simpler signal reconstruction network 214. In this manner, the output of the second neural network circuit (or stage) 212 is a vector representation of the second-stage clean signal estimate 213 for the current frame $\ell$. The vector representation of the second-stage clean signal estimate 213 is then applied to a signal reconstruction circuit 214, which is configured to generate a time domain second-stage estimate 215 of the clean signal from the frame representations of the second-stage clean signal estimate 213. In one example, this may be achieved by applying an inverse transform from the processing domain back to the time domain, together with a subsequent combination of the time domain frames, e.g. by Inverse Fast Fourier Transform (IFFT) and an overlap add (OLA) operation, in one example embodiment.

In some examples, it is envisaged that a so-called overlap-save (OLS) technique may be used, where the IFFT is being used and a portion of the resulting time-domain frame is appended to a respective previous portion of the frame, thereby producing a time-domain output.

In some examples, it is envisaged that if the next processing step is an automatic speech recognizer (ASR), the IFFT and OLA/OLS schemes may be dropped, and a recognition of speech may be achieved by directly operating on a frequency-domain output (instead of a time domain second-stage estimate 215) of the invention. Thus, it is envisaged that both the first acoustic interference suppression circuit (e.g. stage) 216, followed by the second speech restoration circuit (e.g. stage) 217 may be equally well performed directly in the time domain, as compared to the described frequency domain.

In some examples, and before performing both the first acoustic interference suppression circuit (e.g. stage) 216, followed by the second speech restoration circuit (e.g. stage) 217, the first neural network circuit (or stage) 207 and second neural network circuit (or stage) 212 may be trained on a specified dataset. In some examples, such training may be performed by adapting, say, internal parameters $\Theta$, e.g. the weights and biases defining the mapping that is carried out by the neural network, in order to minimize a loss function between the neural network outputs and desired output values (e.g. targets). In a practical neural network training implementation, it is known to use some form of gradient descent algorithm, in order to iteratively adapt the internal parameters, i.e. the weights and biases in the neural network, in order to minimize the selected loss function as far as possible. In each iteration of such gradient descent algorithm, a relatively small internal parameter adjustment is performed in the direction of steepest descent of the loss function on a mini-batch of data. This iterative training scheme can be initialized with random settings for the internal parameters, or with some predetermined values. The iterative training scheme is performed until one or more stopping criteria is met, e.g. one such criterion could be to stop iterative training when no more decrease is seen in the loss function when performing gradient descent iterations on new mini-batches of data.

This training procedure may be performed either by separately training the two different networks, or by jointly training the two neural network circuits (i.e. the two neural networks are effectively considered as a combined two-stage network from the start). In some examples, the training procedure may be performed following separate first training routines and thereafter using the obtained internal neural network parameters e.g. the weights and biases defining the mapping that is carried out by the neural network, to initialize both neural networks and subsequently train the combined networks jointly.

In some examples, it is envisaged that a use of discriminative training and a mean squared error (MSE) loss function may be used when training the second stage neural network, noting that the training relies on a use of a certain loss function, as would be appreciated by a skilled artisan. In some examples, it is envisaged that different loss functions, such as a perceptually motivated loss for maximizing speech naturalness and/or other training schemes such as generative adversarial network (GAN) training, may be used for different embodiments and implementations.

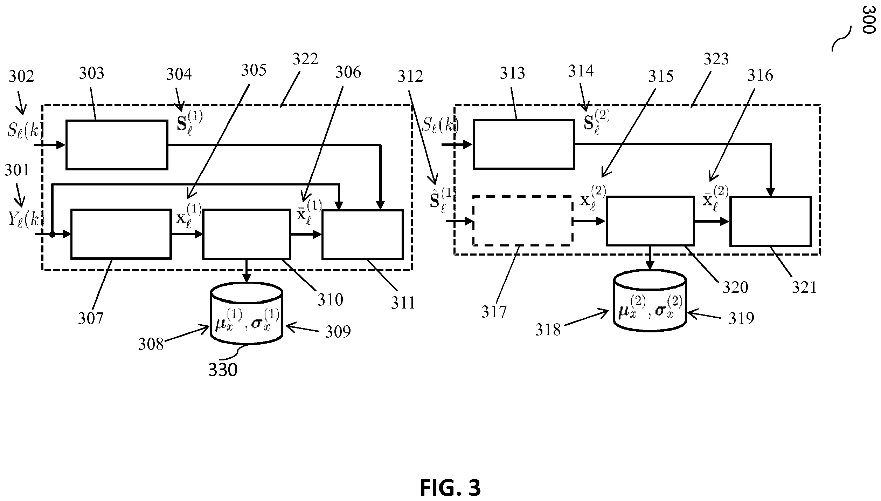

FIG. 3 schematically illustrates a block diagram of separate training schemes including training an acoustic interference suppression neural network circuit 322 and subsequently training a speech restoration neural network circuit 323, according to an example of the present invention. In one example, the training of the acoustic interference suppression neural network circuit 322 is performed first. The example training approach in FIG. 3 may use the same frame timing and FFT, as used in processing the noisy speech signal training data 301 and the clean speech signal data 302, which offers advantages with respect to the overall delay and quality of the stored training data.

In examples of the invention, the training of the acoustic interference suppression neural network circuit 322 and subsequently training of the speech restoration neural network circuit 323 operates on input/target pairs of speech signal training data 301 (i.e. speech plus acoustic background interference) and clean speech signal data 302, which are aligned in time and level, i.e. they stem from the same time-frame of the same speech sentence. The speech signal training data 301 is input to feature extraction circuit 307. After the feature extraction circuit 307 has extracted one or more feature(s) of the noisy speech signal training data 301, such as signal magnitudes, real and imaginary parts of the audio spectrum, mel-frequency-based spectral magnitudes, etc., a normalization of the extracted features is performed in normalization circuit 310 using, say, a vector of means 308 and/or a vector of standard deviations 309, extracted from a data storage element 330. In some examples, the two vectors may be computed over all samples in a training data set. The resulting normalized features 306 output from normalization circuit 310 may be used as an input to the first neural network circuit (or stage) 311. In some examples, the first neural network circuit (or stage) 311 may also receive a 'direct' version of the speech signal training data 301, as shown.

In a parallel signal path of the acoustic interference suppression neural network 322, the clean speech signal data 302 is input to a target preparation circuit 303, which is configured to restructure the clean speech signal data 302 into a suitable vector representation form 304 for network learning, which matches the dimension and domain of the desired neural network output. In one example embodiment, training is performed in the target preparation circuit 303 using standard backpropagation with the mean spectral approximation (MSA) loss function, as shown in equ.[1]:

$$J_{\mathrm{MSA}}(\mathbf{\Theta}^{(1)}) = \frac{1}{|\mathcal{B}_1|} \sum_{\ell' \in \mathcal{B}_1} ||\hat{\mathbf{m}}_{\ell'} \odot \mathbf{Y}_{\ell'} - \mathbf{S}_{\ell'}^{(1)}||_2^2 \qquad [1]$$

With: $\| \cdot \|_2$ being the L2-norm,

$\hat{\mathrm{m}}_{\ell'}$ being the network output vector,

$\mathrm{Y}_{\ell}$ and $\mathbf{S}_{\ell'}^{(1)}$ being the matching vector representations of noisy speech signal training data 301 and clean speech signal data 302 respectively, and

$B_1$ and $\Theta^{(1)}$ being the set of frame indices for the current mini-batch and the trainable parameters of the first stage network, respectively.

In some examples, the vector representations $\mathrm{Y}_{\ell}$ and $\mathbf{S}_{\ell'}^{(1)}$ may contain real and imaginary parts of spectral bins resulting in a complex MSA loss, or they may contain spectral magnitudes resulting in a magnitude MSA loss. Alternatively, in other examples, it is envisaged that other loss functions may be used, such as a magnitude or complex variant of MSA with square-root values, as shown in equ.[2]:

$$J_{\mathrm{MSAsq}}(\mathbf{\Theta}^{(1)}) = \frac{1}{|\mathcal{B}_1|} \sum_{\ell' \in \mathcal{B}_1} ||\hat{\mathbf{m}}_{\ell'} \odot \mathbf{Y}_{\ell'} - \mathbf{S}_{\ell'}^{(1)}||_1$$

[2]

with $\|\cdot\|_1$ being the L1-norm.

In other examples, it is envisaged that a generative adversarial network (GAN) loss function may be used, which, as opposed to the loss functions mentioned above, does not directly compare the network outputs to a target clean speech representation. Instead, an adversarial training scheme may be employed, where an additional binary classification network (referred to as a 'discriminator') with the trainable parameters $\mathbf{\Theta}_D^{(1)}$ is employed to distinguish between data of the target domain $\mathbf{S}_{\ell'}^{(1)}$ and the masked output data $\hat{\mathbf{S}}_\ell^{(1)} = \hat{\mathbf{m}}_\ell \odot \mathbf{Y}_\ell$ of the first neural network circuit (or stage) 311. In this example, during training with a GAN loss function, separate update steps may be employed for the newly defined binary classifier and the first neural network circuit 311, which are based on the losses computed according to equ.[3] and equ.[4]:

$$J_{D,\ell'}(\mathbf{\Theta}_D^{(1)}) = \frac{1}{2}(D(\mathbf{S}_{\ell'}^{(1)}) - 1)^2 + \frac{1}{2}(D(\hat{\mathbf{S}}_{\ell'}^{(1)}))^2$$

[3]

and

$$J_{G,\ell'}(\mathbf{\Theta}^{(1)}) = \frac{1}{2}(D(\hat{\mathbf{S}}_{\ell'}^{(1)}) - 1)^2$$

[4]

Where: $D(\cdot)$ is an output of the classifier network, representing the probability of its input signal belonging to the target domain.

During a first step, the classifier of the first neural network circuit (or stage) 311 is trained, according to $J_{D,\ell}$ [3] in order to distinguish between the clean signal $\mathbf{S}_{\ell'}^{(1)}$ and an enhanced signal $\hat{\mathbf{S}}_{\ell'}^{(1)}$. The second step trains the first neural network circuit (or stage) 311 according to $J_{G,\ell}$ [4] to output an enhanced signal $\hat{\mathbf{S}}_{\ell'}^{(1)}$, that cannot be distinguished from the target clean speech $\mathbf{S}_{\ell'}^{(1)}$ by the discriminator. It is envisaged that this example training scheme is one of many envisaged alternative ways of employing GAN loss functions, with minor changes to the training scheme described above, that can also be used for training of the first neural network circuit (or stage) 311.

In some examples, it is envisaged that the first neural network circuit (or stage) 311 may also consist of two or more equal or unequal networks (referred to as 'subnetworks'), in order to achieve a better acoustic interference attenuation. This may mean that, in the first neural network circuit (or stage) 311, only one final loss function is defined. In other examples, a loss function may be defined after each of the 'subnetworks'. In some examples, it is envisaged that such subnetworks may be trained one after the other, or they may be trained jointly.

The inventors have recognised and appreciated that if the same training dataset is used for training both the first neural network circuit (or stage) 322 and the second stage speech restoration neural network 323, the first stage acoustic interference suppression may result in an unrealistic suppression level for the data that the second stage will encounter, i.e. the residual noise level following the first stage acoustic interference suppression may be too low. Thus, in some examples of the invention, it is envisaged that the training dataset used for training the first neural network circuit (or stage) 322 may be configured to be different to the training dataset used for training the second stage speech restoration neural network 323.

In some examples, the training scheme of the second stage speech restoration neural network 323 may be configured as essentially the same as for the first acoustic interference suppression neural network circuit (or stage) 322, with the exception of using the output 312 of the first acoustic interference suppression neural network circuit (or stage) 322 as input to the second feature extraction circuit 317 and the usage of the MSE loss function, as shown in equ.[5]:

$$J_{\mathrm{MSE}}(\mathbf{\Theta}^{(2)}) = \frac{1}{|\mathcal{B}_2|} \sum_{\ell' \in \mathcal{B}_2} ||\hat{\mathbf{S}}_{\ell'} - \mathbf{S}_{\ell'}^{(2)}||_2^2 \qquad [5]$$

With:

$\hat{\mathbf{S}}_{\ell'}^{(2)}$ and $\mathbf{S}_{\ell'}^{(2)}$ being the network output representation of estimated speech and the matching representation of clean speech respectively; and

$B_2$ and $\Theta^{(2)}$ being the set of frame indices for the current mini-batch and the trainable parameters for the second speech restoration neural network circuit (or stage) 323 respectively.

In some examples, as mentioned above, the vector representations $\hat{\mathbf{S}}_{\ell'}^{(2)}$ and $\mathbf{S}_{\ell'}^{(2)}$ may be configured to contain real and imaginary parts of spectral bins resulting in a complex MSE loss. Alternatively, in some examples, the vector representations $\hat{\mathbf{S}}_{\ell'}^{(2)}$ and $\mathbf{S}_{\ell'}^{(2)}$ may be configured to contain spectral magnitudes resulting in a magnitude MSE loss. Alternatively, in other examples, other loss functions may be used, such as the magnitude or complex variant of the mean absolute error (MAE) loss function, as shown in equ.[6]:

$$J_{\mathrm{MAE}}(\mathbf{\Theta}^{(2)}) = \frac{1}{|\mathcal{B}_2|} \sum_{\ell' \in \mathcal{B}_2} ||\hat{\mathbf{S}}_{\ell'} - \mathbf{S}_{\ell'}^{(2)}||_1 . \qquad [6]$$

A further example option for the second speech restoration neural network circuit (or stage) 323 is to use a generative adversarial network (GAN) loss function. As described above, the second speech restoration neural network circuit (or stage) 323 may be configured so as to not directly compare the network outputs to a target clean speech representation. Instead, an adversarial training scheme may be employed in some examples, where an additional binary classification network (referred to as a 'discriminator') with the trainable parameters $\mathbf{\Theta}_D^{(2)}$ may be employed to distinguish between data of the target domain $\mathbf{S}_{\ell'}^{(2)}$ and the output data $\hat{\mathbf{S}}_{\ell'}^{(2)}$ of the second speech restoration neural network circuit (or stage) 321, where the frame index is for mini-batches used during training (i.e. a subset of the whole data grouped during neural network training). During training with a GAN loss, separate update steps may be employed for the newly defined binary classifier, and the second neural network circuit (or stage) 321, which are based on the losses computed according to, equ.[7] and equ.[8]:

$$J_{D,\ell'}(\mathbf{\Theta}_D^{(2)}) = \frac{1}{2}(D(\mathbf{S}_{\ell'}^{(2)}) - 1)^2 + \frac{1}{2}(D(\hat{\mathbf{S}}_{\ell'}^{(2)}))^2 \qquad [7]$$

and

$$J_{G,\ell'}(\mathbf{\Theta}^{(2)}) = \frac{1}{2}(D(\hat{\mathbf{S}}_{\ell'}^{(2)}) - 1)^2 \qquad [8]$$

Where:
$D(\cdot)$ is the output of the classifier network, representing the probability of its input signal belonging to the target domain.
In a first step, the classifier of the second neural network circuit (or stage) 321 is trained, according to $J_{D,\ell}$ in equ.[7] in order to distinguish between the clean signal $\mathbf{S}_{\ell'}^{(2)}$ and enhanced signal $\hat{\mathbf{S}}_{\ell'}^{(2)}$. The second step trains the second neural network circuit (or stage) 321 according to $J_{G,\ell}$ in equ.[8] in order to output an enhanced signal $\hat{\mathbf{S}}_{\ell'}^{(2)}$.

that cannot be distinguished from the target clean speech $\mathbf{S}_{\ell'}^{(2)}$ by the discriminator. It is envisaged that this example training scheme is one of many envisaged alternative ways of employing GAN loss functions, with minor changes to the training scheme described above, that can also be used for training of the second neural network circuit (or stage) 321.

Again, in some examples, it is envisaged that the second neural network circuit (or stage) 321 may also consist of two or more equal or unequal networks (referred to as 'subnetworks'), in order to achieve a better acoustic interference attenuation. This may mean that, in the second neural network circuit (or stage) 321, only one final loss function is defined. In other example, a loss function may be defined after each of the 'subnetworks'. In some examples, it is envisaged that such subnetworks may be trained one after the other, or they may be trained jointly.

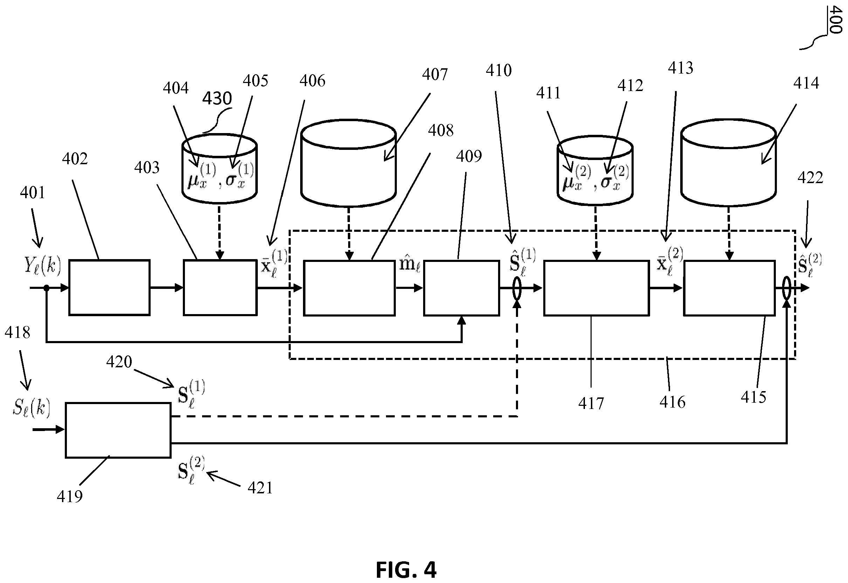

Referring now to FIG. 4, a block diagram 400 illustrates a joint neural network training scheme, to jointly train a first acoustic interference suppression neural network circuit (or stage) and second speech restoration neural network circuit (or stage), according to some examples of the present invention. One example of a mechanism to perform joint training of the neural networks for both circuits or stages, includes a feature extraction circuit 402 configured to extract one or more feature(s) of a noisy speech signal training data 401. A normalization of the extracted features is performed in first normalization circuit 403 using, say, a vector of means 404 and/or a vector of standard deviations 405, extracted from a storage element 430. In some examples, the two vectors may be computed over all samples in the training data set. The resulting normalized features 406 output from normalization circuit 403 may be used as an input to the joint, two-stage, neural network circuit (or stage) 416. The joint, two-stage, neural network circuit (or stage) 416 includes a first neural network circuit 408, configured to receive the first pre-trained parameters 407.

Inside of the joint, two-stage, neural network circuit (or stage) 416, the processing operations then include an estimation 410 of the mask vector $\hat{\mathrm{m}}_\ell$ being performed in masking circuit 409, following the mask vector $\hat{\mathrm{m}}_\ell$ being output from the first neural network circuit 408, resulting in $\hat{\mathbf{S}}_\ell^{(1)} = \hat{\mathrm{m}}_\ell \odot \mathbf{Y}_\ell$. The estimation 410 of the mask vector $\hat{\mathrm{m}}_\ell$ is then input to a second normalization circuit 417 using, say, mean and variance value statistics 411, 412 computed during separate training, and processing of the second-stage neural network circuit 415. The second-stage neural network circuit 415 is configured to receive second pre-trained parameters 414 and is configured to reconstruct the speech signal. The network parameters $\Theta^{(1)}$ and $\Theta^{(2)}$ as defined above, for the first neural network circuit 408 and the second-stage neural network circuit 415, are initialized with the first pre-trained parameters 407 and the configured to receive the second pre-trained parameters 414, notably obtained from separate training of the respective networks in this example.

In a parallel signal processing path to the joint, two-stage, neural network circuit (or stage) 416, the targets for backpropagation training of the joint, two-stage, neural network circuit (or stage) may be computed from a framed frequency domain representation of the corresponding clean speech signal 418. This computation may be performed during target preparation 419, which is configured to restructure the clean speech signal data 418 into a suitable vector representation form 420 for network learning, which matches the dimension and domain of the desired neural network output. In one example embodiment, training is performed in the target preparation circuit 419 using standard backpropagation with the mean spectral approximation (MSA) loss function. Depending on the used loss function, either only the target representation 421 from second-stage training or only the target representation 420 from first-stage training is used. In another example, target representation from joint training may be used) Accordingly, the loss function can be either $J_{\mathrm{MSE}}(\Theta^c)$ where $\Theta^c$ represents all trainable parameters 416 of, or a combined loss, as shown in equ.[9]:

$$J_{\mathrm{combined}}(\Theta^c) = \beta J_{\mathrm{MSA}}(\Theta^{(1)}) + (1 - \beta) J_{\mathrm{MSE}}(\Theta^c) \qquad [9]$$

including the intermediate loss $J_{\mathrm{MSA}}(\Theta^{(1)})$ and the weighting parameter $\beta$.

In other example embodiments, it is envisaged that it is also possible to use the described joint training procedure either with $J_{\mathrm{MSE}}(\Theta^c)$ or $J_{\mathrm{combined}}(\Theta^c)$ using a random initialization for $\Theta^c$, and excluding the normalization circuit 417 to perform joint training from the outset.

The aforementioned circuit topologies and neural network processing domains, e.g. relating to FIG. 1 for the first neural network circuit (or stage) 102, configured to suppress acoustic interference in a degraded input speech signal 101, and the second neural network circuit (or stage) 103, configured to restore natural sounding speech, have to be chosen according to their specific tasks for the final two-stage enhancement to perform well. That is, the first neural network circuit (or stage) 102 is configured to suppress acoustic interferences in a degraded speech signal, and the second neural network circuit (or stage) 103 is configured to restore natural sounding speech and potentially suppress residual acoustic interferences based on the outputs of the first neural network circuit (or stage) 102.

For acoustic interference suppression of speech signals, and in reference to FIG. 2, the preferred circuit model for the first neural network circuit (or stage) 207 is a long short-term memory (LSTM) network, which in some examples comprises two LSTM layers that enable a modelling of temporal dependencies in the noisy speech and a fully-connected feedforward output layer, as would be understood by a skilled artisan.

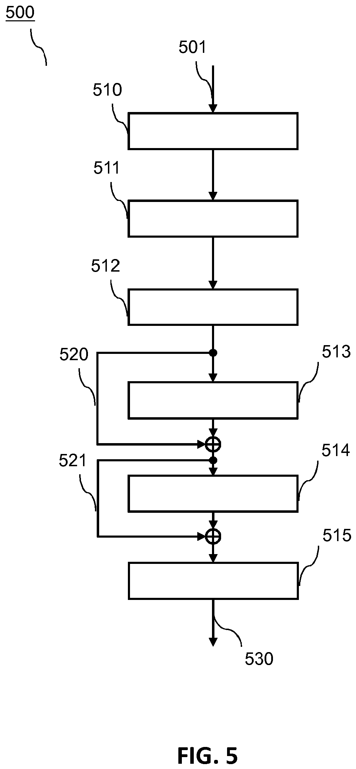

Referring now to FIG. 5, a flowchart 500 illustrates an example of a topology for an acoustic interference suppression stage neural network, in accordance with some examples of the invention. The flowchart comprises a series of feedforward layers and a series of long short-term memory (LSTM) network operations. The example of FIG. 5 illustrates a feedforward layer 510, followed by the two LSTM layers 511 and 512, two feedforward layers 513 and 514, employing skip connections 520 and 521, and a final output layer 515. It is envisaged that many alternative topologies may be employed for the acoustic interference suppression stage neural network, with the illustrated example of three feedforward layers 510, 513, 514 and two LSTM network operations 511, 512 just one possible example. Thus, in other examples, any number of feedforward layers and/or LSTM network operations may be employed. In some examples, the LSTM layers 511, 512 may comprise of standard LSTM cells without 'peephole' connections, and the feedforward layers 510, 513, 514 may use rectified linear unit (ReLU) activation functions, and the output layer 515 may use a hyperbolic tangent activation function, for example.

In examples not forming part of the invention, it is envisioned that types of recurrent neural networks (RNNs) differing from LSTMs can be used for the acoustic interference suppression stage. RNNs are regarded as the class of neural networks that employ internal network states from previous time steps in a temporal sequence of input data (in addition to the feature vector) for the computation of the network output. This enables RNNs to model temporal dynamics of the underlying sequential data.

For performing speech restoration, and in reference to FIG. 2, the preferred circuit model for the second neural network circuit (or stage) 212 is a convolutional neural network (CNN) that is configured to use an encoder-decoder structure and skip connections, thereby enabling the model to focus on local context in the input features, whilst still being able to use high resolution data in the last model layers.

Examples of the invention also described a method of speech processing that includes a first neural network circuit configured to suppress acoustic interference of an input speech signal and a second neural network circuit configured to restore at least one clean speech component of the input speech signal. In examples of the invention, the acoustic interference suppression aspect of the method includes receiving an input speech signal that comprises clean speech and acoustic interference; suppressing the acoustic interference in the input speech signal by a first neural network circuit; outputting a representation of an estimate of a clean speech signal to a second neural network circuit. In examples of the invention, the clean speech restoration aspect of the method includes restoring at least one speech component of the clean speech in the input speech signal by the second neural network circuit; and outputting a reconstructed speech signal.

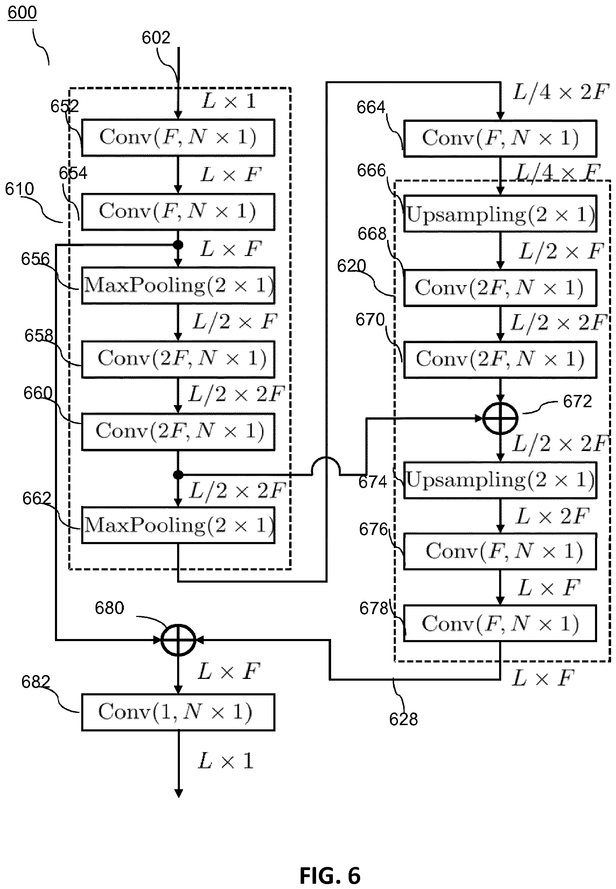

FIG. 6 illustrates a flowchart 600 of an example of a topology for a speech restoration stage neural network, not forming part of the invention. The flowchart describes a method for speech processing that includes receiving an acoustic background interference suppressed input speech signal from a first neural network circuit. The second speech restoration stage is illustrated with an encoder 610/decoder 620 structure. The encoder 610 does not necessarily perform only acoustic interference suppression. Likewise the decoder 620 does not necessarily perform speech restoration only. In accordance with examples of the invention, the speech restoration stage neural network restores at least one speech component of the estimated clean speech signal and outputs a reconstructed speech signal.

In particular, in the example of FIG. 6, the dimension of one example of the feature representation for each layer is shown next to the arrows. Convolutional layers are denoted by $\mathrm{Conv}(N_F, S_1 \times S_2)$ with $N_F$ being the number of kernels used in the layer and $S_1$ and $S_2$ being the kernel sizes on the feature and frame axis respectively. This example embodiment exclusively uses one-dimensional convolutions with $S_2 = 1$, as shown, and therefore only needs features extracted from the current frame. In this example, all convolutional layers 652, 654, 658, 660, 664, 668, 670, 676, 678, 682 use leaky rectified linear units (ReLU) activation functions. It is noted in FIG. 6 that convolutional layer 664 is a bottleneck layer between the encoder 610 and decoder 620. In other examples, it is envisaged that alternative options may be used, as would be appreciated by a skilled artisan, such as: tanh() = tangens, hyperbolicus, sigmoid functions, exponential linear units (ELUs), linear function, etc ..., with the last layer being an exception using a linear activation function. Further layers that may be utilised include a maximum pooling layers 656, 662 with kernel size 2x1 and up-sampling layers 666, 674 that perform up-sampling of a factor 2 on the feature axis. Although this example illustrates one or more maximum pooling layers 656, 662 it is envisaged that the one or more pooling layers may be non-maximum, for example average pooling layer(s), in other implementations. Although this example illustrates one or more up-sampling layers 666, 674 it is envisaged that inverse convolution layers with a stride larger than one may be employed in other implementations.

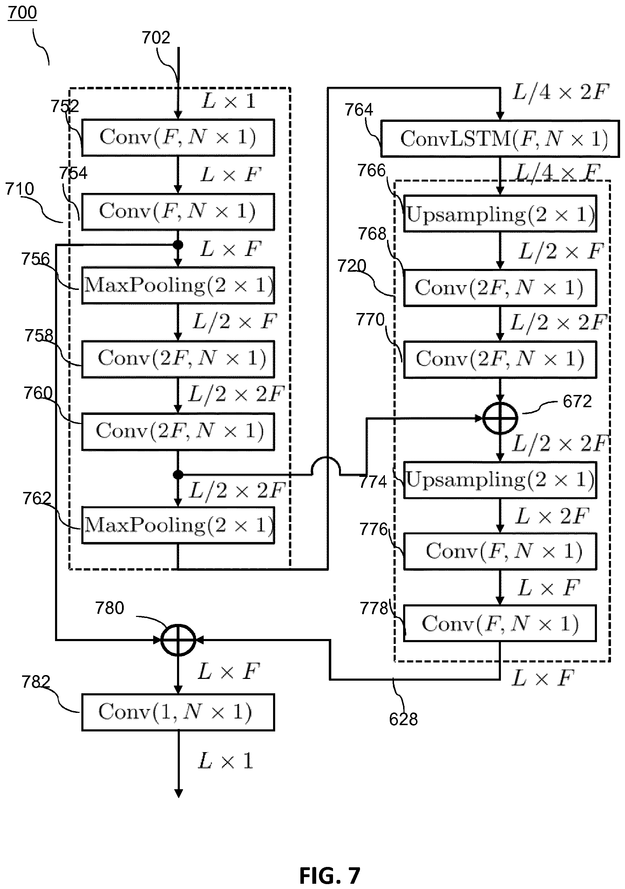

Referring now to FIG. 7, a flowchart 700 illustrates topology for a second stage neural network, which can be employed to restore at least one speech component, in accordance with the invention. In this alternative example, the encoder-decoder structure of FIG. 6 is replicated, with the exception of including an LSTM-based layer 764 in a bottleneck layer between the encoder 710 and decoder 720. Thus, the identical operations to FIG. 6 will not be further explained, to avoid obfuscating the invention. In the invention, the LSTM-based layer 764 is a convolutional LSTM layer 764, denoted by ConvLSTM (or for other examples a fully-connected LSTM layer), and may account for temporal dependencies in the estimation task of the second-stage network 700. It is envisaged that in some examples, other convolutional layers in 700, e.g., 778 or 782, may be exchanged with LSTM-based layers in a similar manner.

In some example, the preferred processing domain for both stages of the invention is the frequency domain, using spectral magnitudes, as shown in equ.[10]:

$$\hat{\mathbf{x}}_{\ell}^{(1)} = [|Y_{\ell}(0)|, |Y_{\ell}(1)|, \ldots, |Y_{\ell}(K/2)|]^T \qquad [10]$$

as features for the first neural network circuit (or stage) 207, 311, 408, where $K$ is the FFT size. In other examples, it is envisaged that alternative exemplary options for feature representations may be used, such as real and imaginary part of the spectrum and Mel-frequency-based spectral magnitudes. The output domain of the first neural network circuit (or stage) 207, 311, 408 is chosen to consist of real and imaginary parts of the spectral bins to enable the network to estimate the clean speech phase and provide even higher acoustic interference attenuation. This is achieved by setting the target representation to, as shown in equ.[11]:

$$\mathbf{S}_{\ell}^{(1)} = [\Re\{S_{\ell}(0)\}, \Re\{S_{\ell}(1)\}, \ldots, \Re\{S_{\ell}(K/2)\}, \Im\{S_{\ell}(2)\}, \Im\{S_{\ell}(2)\}, \ldots, \Im\{S_{\ell}(K/2-1)\}]^T \in \mathbb{R}^K,$$
$$[11]$$

constructing $Y_{\ell}$ accordingly from $Y_{\ell}(k)$ and setting the output size of the first neural network circuit (or stage) 207, 311, 408 to $K$.

In some examples, the second neural network circuit (or stage) 212, 321, 415 may also operate on real and imaginary parts of spectral bins, and accordingly the respective feature extraction circuit 210, 317 can be omitted, setting:

$$\hat{\mathbf{x}}_{\ell}^{(2)} = \hat{\mathbf{S}}_{\ell}^{(1)} = \left[\Re\{\hat{S}_{\ell}^{(1)}(0)\}, \Re\{\hat{S}_{\ell}^{(1)}(1)\}, \ldots, \Re\{\hat{S}_{\ell}^{(1)}(K/2)\}, \Im\{\hat{S}_{\ell}^{(1)}(1)\}, \Im\{\hat{S}_{\ell}^{(1)}(2)\}, \ldots, \Im\{\hat{S}_{\ell}^{(1)}(K/2-1)\}\right]^T \in \mathbb{R}^K$$
$$[12]$$

and

$$\mathbf{S}_{\ell}^{(2)} = \mathbf{S}_{\ell}^{(1)} \qquad [13]$$

Alternatively, the real and imaginary parts of the spectral bins can be presented to the second neural network circuit (or stage) 212, 321, 415 as separate feature maps for real and imaginary parts if the preferred CNN topology is chosen for this neural network.

It is envisaged that the first and second stages of the two-stage neural network-based speech enhancement circuit 100, configured to provide acoustic interference suppression and speech reconstruction, may be implemented in hardware, software or firmware. Furthermore, it is envisaged that the neural network circuits employed by the acoustic interference suppression and speech reconstruction circuits may be performed in firmware, such as using field programmable logic/gate arrays (FPGAs), or programmed in software using a digital signal processor or may be implemented in hardware, although a firmware or software-based approach is typically the most economical. Also for example, in one embodiment, the illustrated examples may be implemented as circuitry located on a single integrated circuit or on an integrated circuit within a single device, such as a speech processing system. Alternatively, the examples may be implemented as any number of separate integrated circuits or separate devices interconnected with each other in a suitable manner.

In this document, the terms 'computer program product' 'computer-readable medium' and the like may be used generally to refer to media such as, for example, memory, storage device, or storage unit. These and other forms of computer-readable media may store one or more instructions for use by a processor, to cause the speech processor to perform specified operations. Such instructions, generally referred to as computer program code' (which may be grouped in the form of computer programs or other groupings), when executed, enable the speech processing system 100 to perform functions of embodiments of the present invention. Note that the code may directly cause the speech processor to perform specified operations, be compiled to do so, and/or be combined with other software, hardware, and/or firmware elements (e.g., software libraries for performing standard functions) to do so. In an embodiment where the elements are implemented using software, the software may be stored in a computer-readable medium and loaded into speech processing system 100 using, for example, removable storage unit, a drive or a communications interface. The control logic (in this example, software instructions or computer program code), when executed by the speech processor, causes the speech processor to perform the functions of the invention as described herein. In examples of the invention, the computer program product may be a non-transitory tangible computer program product comprising executable code stored therein for speech processing, wherein the code is operable for, when executed at a speech processor: receiving an input speech signal that comprises clean speech and acoustic interference; suppressing the acoustic interference in the input speech signal by a first neural network circuit; outputting a representation of an estimate of a clean speech signal to a second neural network circuit; restoring at least one speech component of the clean speech in the input speech signal by the second neural network circuit; and outputting a reconstructed speech signal.

Although examples of the invention have been described with reference to two neural networks, a first configured for acoustic interference suppression followed by a second configured for speech restoration, it is envisaged that examples of the invention may be applied to all kinds of acoustic interferences, e.g. environmental noise, acoustic echo/feedback and reverberation or residuals of those acoustic interferences after preliminary enhancement. Therefore, in some examples, the neural networks may be applied in products using acoustic interference reduction techniques, for the mobile, automotive, wearable and Internet of Things (IoT) technology space. It is also envisaged that examples of the invention may also be applied in the preprocessing for automatic speech recognition systems, operating in noisy environments, such as in the automotive context, mobile devices or smart speaker systems.

A skilled artisan will appreciate that the level of integration of circuits or components may be, in some instances, implementation-dependent.

In the foregoing specification, the invention has been described with reference to specific examples of embodiments of the invention. It will, however, be evident that various modifications and changes may be made therein without departing from the scope of the invention as set forth in the appended claims and that the claims are not limited to the specific examples described above. In particular, examples of the invention describe an integrated circuit with an input that receives an input speech signal; and two respective neural networks. A first neural network circuit is configured to suppress input speech corrupted by acoustic interference and output an estimated clean speech signal; and a second neural network circuit is configured to receive the estimated clean speech signal and restore at least one speech component and output a reconstructed speech signal.

Furthermore, because the illustrated embodiments of the present invention may, for the most part, be implemented using electronic components and circuits known to those skilled in the art, details will not be explained in any greater extent than that considered necessary as illustrated above, for the understanding and appreciation of the underlying concepts of the present invention and in order not to obfuscate or distract from the teachings of the present invention.

Those skilled in the art will recognize that the boundaries between logic blocks are merely illustrative and that alternative embodiments may merge logic blocks or circuit elements or impose an alternate decomposition of functionality upon various logic blocks or circuit elements. Thus, it is to be understood that the architectures depicted herein are merely exemplary, and that in fact many other architectures can be implemented that achieve the same functionality.

Any arrangement of components to achieve the same functionality is effectively 'associated', such that the desired functionality is achieved. Hence, any two components herein combined to achieve a particular functionality can be seen as being 'associated with' each other, such that the desired functionality is achieved, irrespective of architectures or intermediary components. Likewise, any two components so associated can also be viewed as being 'operably connected,' or 'operably coupled,' to each other to achieve the desired functionality.

Furthermore, those skilled in the art will recognize that boundaries between the above described operations are merely illustrative. The multiple operations may be executed at least partially overlapping in time. Moreover, alternative example embodiments may include multiple instances of a particular operation, and the order of operations may be altered in various other embodiments.

Also for example, in one embodiment, the illustrated examples may be implemented as circuitry located on a single integrated circuit or within a same device. Alternatively, the examples may be implemented as any number of separate integrated circuits or separate devices interconnected with each other in a suitable manner.

Also, examples of the invention are not limited to units implemented in non-programmable hardware but can also be applied in wireless programmable devices or units able to perform the desired device functions by operating in accordance with suitable program code. However, other modifications, variations and alternatives are also possible. The specifications and drawings are, accordingly, to be regarded in an illustrative rather than in a restrictive sense.

In the claims, any reference signs placed between parentheses shall not be construed as limiting the claim. The word 'comprising' does not exclude the presence of other elements or steps then those listed in a claim. Furthermore, the terms 'a' or 'an,' as used herein, are defined as one, or more than one. Also, the use of introductory phrases such as 'at least one' and 'one or more' in the claims should not be construed to imply that the introduction of another claim element by the indefinite articles 'a' or 'an' limits any particular claim containing such introduced claim element to inventions containing only one such element, even when the same claim includes the introductory phrases 'one or more' or 'at least one' and indefinite articles such as 'a' or 'an.' The same holds true for the use of definite articles. Unless stated otherwise, terms such as 'first' and 'second' are used to arbitrarily distinguish between the elements such terms describe. Thus, these terms are not necessarily intended to indicate temporal or other prioritization of such elements. The mere fact that certain measures are recited in mutually different claims does not indicate that a combination of these measures cannot be used to advantage.

**Claims**

1.  A speech processing system (100, 200) comprising:

    an input that receives an input speech signal (101, 201) that comprises clean speech and acoustic interference;
    a first neural network circuit (102, 216) configured to suppress the acoustic interference in the input speech signal (101, 201) and output (120) a representation of an estimate of a clean speech signal (209); and
    a second neural network circuit (103, 217) configured to receive the representation of the estimated clean speech signal (209) and restore at least one speech component of the clean speech in the input speech signal (101, 201) and output a reconstructed speech signal (104, 215);
    **characterised in that**
    the first neural network circuit (102, 216) comprises a recurrent neural network, RNN, topology and the first neural network circuit (102, 216) comprises at least one long short-term memory, LSTM, layer; and
    the second neural network circuit (103, 217) comprises an encoder (610, 710) - decoder (620, 720) topology that includes at least one bottleneck layer (664, 764), and the bottleneck layer (764) comprises at least one convolutional LSTM bottleneck layer.

2.  The speech processing system (100, 200) of claim 1, wherein the second neural network circuit (103, 217) is configured to additionally suppress residual acoustic interference contained in the representation of the estimated clean speech signal (209).

3.  The speech processing system (100, 200) of Claim 1 wherein the first neural network circuit (102, 216) comprises a combination of at least one LSTM, layer (511, 512) and at least one feedforward layer (510, 513, 514).

4.  The speech processing system (100, 200) of Claim 1 or Claim 3 wherein at least one layer (510, 513, 514) of the first neural network circuit (102, 216) comprises at least one skip connection (520, 521).

5.  The speech processing system (100, 200) of any preceding Claim wherein the second neural network circuit (103, 217) comprises at least one of: at least one pooling layer, at least one re-sampling layer, at least one skip connection.

6.  The speech processing system (100, 200) of any preceding Claim, wherein the input is configured to receive at least one of: at least one auxiliary input signal (105) that comprises acoustic interference or an acoustic interference estimate; at least one additional microphone signal (260).

7.  The speech processing system (100, 200) of any preceding Claim, further comprising at least one pre-processing circuit coupled to the input and configured to provide the input speech signal (101, 201) with reduced interference to the first neural network circuit (102, 216).

8.  The speech processing system (100, 200) of any preceding Claim, wherein the first neural network circuit (102, 216) and second neural network circuit (103, 217) are configured to be subjected to joint training of both circuits combined.

9.  The speech processing system (100, 200) of any preceding Claim, wherein the second neural network circuit (103) is configured to additionally receive the input speech signal (101) as an additional input in generating an output representation of an enhanced speech signal (104).

10. A method for speech processing comprising:

    receiving an input speech signal (101, 201) that comprises clean speech and acoustic interference;
    suppressing the acoustic interference in the input speech signal (101, 201) by a first neural network circuit (102, 216);
    outputting (120) a representation of an estimate of a clean speech signal (209) to a second neural network circuit (103, 217);
restoring at least one speech component of the clean speech in the input speech signal (101, 201) by the second neural network circuit (103, 217); and
outputting a reconstructed speech signal;
**characterised in that**
the first neural network circuit (102, 216) comprises a recurrent neural network, RNN, topology and the first neural network circuit (102, 216) comprises at least one long short-term memory, LSTM, layer; and
the second neural network circuit (103, 217) comprises an encoder (610, 710) - decoder (620, 720) topology that includes at least one bottleneck layer (664, 764), and the bottleneck layer (764) comprises at least one convolutional LSTM bottleneck layer.

11. A non-transitory tangible computer program product comprising executable code stored therein for speech processing, wherein the code is operable for, when executed at a speech processor:

receiving an input speech signal (101, 201) that comprises clean speech and acoustic interference;
suppressing the acoustic interference in the input speech signal (101, 201) by a first neural network circuit (102, 216);
outputting (120) a representation of an estimate of a clean speech signal (209) to a second neural network circuit (103, 217);
restoring at least one speech component of the clean speech in the input speech signal (101, 201) by the second neural network circuit (103, 217); and
outputting a reconstructed speech signal;
**characterised in that**
the first neural network circuit (102, 216) comprises a recurrent neural network, RNN, topology and the first neural network circuit (102, 216) comprises at least one long short-term memory, LSTM, layer; and
the second neural network circuit (103, 217) comprises an encoder (610, 710) - decoder (620, 720) topology that includes at least one bottleneck layer (664, 764), and the bottleneck layer (764) comprises at least one convolutional LSTM bottleneck layer.

**Patentansprüche**

1. Sprachverarbeitungssystem (100, 200), das aufweist:

einen Eingang, der ein Eingangssprachsignal (101, 201), das klare Sprache und akustische Störungen aufweist, empfängt;
eine erste Neuronales-Netz-Schaltung (102, 216), die dazu ausgebildet ist, die akustischen Störungen in dem Eingangssprachsignal (101, 201) zu unterdrücken und eine Darstellung einer Schätzung eines Klarsprachsignals (209) auszugeben (120); und
eine zweite Neuronales-Netz-Schaltung (103, 217), die dazu ausgebildet ist, die Darstellung des geschätzten Klarsprachsignals (209) zu empfangen und zumindest eine Sprachkomponente der Klarsprache in dem Eingangssprachsignal (101, 201) wiederherzustellen und ein rekonstruiertes Sprachsignal (104, 215) auszugeben;
**dadurch gekennzeichnet, dass**
die erste Neuronales-Netz-Schaltung (102, 216) eine Topologie eines rekurrenten neuronalen Netzes, RNN, aufweist und die erste Neuronales-Netz-Schaltung (102, 216) zumindest eine Schicht mit langem Kurzzeitgedächtnis ("long short-term memory"), LSTM, aufweist; und
die zweite Neuronales-Netz-Schaltung (103, 217) eine Kodierer (610, 710)-Dekodierer (620, 720)-Topologie aufweist, die zumindest eine Engpassschicht ("bottleneck layer"; 664, 764) enthält, und die Engpassschicht (764) zumindest eine Faltungs-LSTM-Engpassschicht enthält.

2. Sprachverarbeitungssystem (100, 200) nach Anspruch 1, wobei die zweite Neuronale-Netz-Schaltung (103, 217) dazu ausgebildet ist, zusätzlich akustische Rest-Störungen, die in der Darstellung des geschätzten Klarsprachsignals (209) enthalten sind, zu unterdrücken.

3. Sprachverarbeitungssystem (100, 200) nach Anspruch 1, wobei die erste Neuronales-Netz-Schaltung (102, 216) eine Kombination aus zumindest einer LSTM-Schicht (511, 512) und zumindest einer vorwärtsverketteten Schicht (510, 513, 514) aufweist.

4. Sprachverarbeitungssystem (100, 200) nach Anspruch 1 oder Anspruch 3, wobei zumindest eine Schicht (510, 513, 514) der ersten Neuronales-Netz-Schaltung (102, 216) zumindest eine Skip-Verbindung (520, 521) aufweist.

5. Sprachverarbeitungssystem (100, 200) nach einem vorhergehenden Anspruch, wobei die zweite Neuronales-Netz-Schaltung (103, 217) zumindest eines von Folgendem aufweist: zumindest eine Pooling-Schicht, zumindest eine Re-Sampling-Schicht, zumindest eine Skip-Verbindung.

6. Sprachverarbeitungssystem (100, 200) nach einem vorhergehenden Anspruch, wobei der Eingang dazu ausgebildet ist, zumindest eines von Folgendem zu empfangen: zumindest ein Hilfs-Eingangssignal (105), das akustische Störungen oder eine Schätzung akustischer Störungen aufweist; zumindest ein zusätzliches Mikrofonsignal (260).

7. Sprachverarbeitungssystem (100, 200) nach einem vorhergehenden Anspruch, das ferner zumindest eine Vorverarbeitungsschaltung, die mit dem Eingang gekoppelt und dazu ausgebildet ist, das Eingangssprachsignal (101, 201) mit verringerten Störungen der ersten Neuronales-Netz-Schaltung (102, 216) zuzuführen, aufweist.

8. Sprachverarbeitungssystem (100, 200) nach einem vorhergehenden Anspruch, wobei die erste Neuronales-Netz-Schaltung (102, 216) und die zweite Neuronales-Netz-Schaltung (103, 217) dazu ausgebildet sind, einem gemeinsamen Training beider kombinierter Schaltungen unterzogen zu werden.

9. Sprachverarbeitungssystem (100, 200) nach einem vorhergehenden Anspruch, wobei die zweite Neuronales-Netz-Schaltung (103) dazu ausgebildet ist, zusätzlich das Eingangssprachsignal (101) als eine zusätzliche Einspeisung beim Erzeugen einer Ausgangsdarstellung eines verbesserten Sprachsignals (104) zu empfangen.

10. Verfahren zur Sprachverarbeitung, das aufweist:

Empfangen eines Eingangssprachsignals (101, 201), das klare Sprache und akustische Störungen aufweist;
Unterdrücken der akustischen Störungen in dem Eingangssprachsignal (101, 201) durch eine erste Neuronales-Netz-Schaltung (102, 216);
Ausgeben (120) einer Darstellung einer Schätzung eines Klarsprachsignals (209) an eine zweite Neuronales-Netz-Schaltung (103, 217);
Wiederherstellen zumindest einer Sprachkomponente der klaren Sprache in dem Eingangssprachsignal (101, 201) durch die zweite Neuronales-Netz-Schaltung (103, 217); und
Ausgeben eines rekonstruierten Sprachsignals;
**dadurch gekennzeichnet, dass**
die erste Neuronales-Netz-Schaltung (102, 216) eine Topologie eines rekurrenten neuronalen Netzes, RNN, aufweist und die erste Neuronales-Netz-Schaltung (102, 216) zumindest eine Schicht mit langem Kurzzeitgedächtnis ("long short-term memory"), LSTM, aufweist; und
die zweite Neuronales-Netz-Schaltung (103, 217) eine Kodierer (610, 710)-Dekodierer (620, 720)-Topologie, die zumindest eine Engpassschicht (664, 764) enthält, aufweist und die Engpassschicht (764) zumindest eine Faltungs-LSTM-Engpassschicht aufweist.

11. Nicht-flüchtiges, greifbares Computerprogrammerzeugnis, das einen darin gespeicherten, ausführbaren Code für Sprachverarbeitung aufweist, wobei der Code, wenn er in einem Sprachprozessor ausgeführt wird, Folgendes operabel ist zum:

Empfangen eines Eingangssprachsignals (101, 201), das klare Sprache und akustische Störungen aufweist;
Unterdrücken der akustischen Störungen in dem Eingangssprachsignal (101, 201) durch eine erste Neuronales-Netz-Schaltung (102, 216);
Ausgeben (120) einer Darstellung einer Schätzung eines Klarsprachsignals (209) an eine zweite Neuronales-Netz-Schaltung (103, 217);
Wiederherstellen zumindest einer Sprachkomponente der klaren Sprache in dem Eingangssprachsignal (101, 201) durch die zweite Neuronales-Netz-Schaltung (103, 217); und
Ausgeben eines rekonstruierten Sprachsignals;
**dadurch gekennzeichnet, dass**
die erste Neuronales-Netz-Schaltung (102, 216) eine Topologie eines rekurrenten neuronalen Netzes, RNN, aufweist und die erste Neuronales-Netz-Schaltung (102, 216) zumindest eine Schicht mit langem Kurzzeitgedächtnis ("long short-term memory"), LSTM, aufweist; und
die zweite Neuronales-Netz-Schaltung (103, 217) eine Kodierer (610, 710)-Dekodierer (620, 720)-Topologie, die zumindest eine Engpassschicht (664, 764) enthält, aufweist und die Engpassschicht (764) zumindest eine Faltungs-LSTM-Engpassschicht aufweist.

**Revendications**

1. Système de traitement de la parole (100, 200) comprenant :

   une entrée qui reçoit un signal de parole d'entrée (101, 201) qui comprend de la parole propre et de l'interférence acoustique ;
   un premier circuit de réseau neuronal (102, 216) configuré pour supprimer l'interférence acoustique dans le signal de parole d'entrée (101, 201) et délivrer en sortie (120) une représentation d'une estimée d'un signal de parole propre (209) ; et
   un second circuit de réseau neuronal (103, 217) configuré pour recevoir la représentation du signal de parole propre (209) estimé et restituer au moins une composante de parole de la parole propre dans le signal de parole d'entrée (101, 201) et délivrer en sortie un signal de parole reconstruit (104, 215) ;
   **caractérisé en ce que**
   le premier circuit de réseau neuronal (102, 216) comprend une topologie de réseau neuronal récurrent, RNN, et le premier circuit de réseau neuronal (102, 216) comprend au moins une couche de mémoire à court et long terme, LSTM ; et
   le second circuit de réseau neuronal (103, 217) comprend une topologie d'encodeur (610, 710)-décodeur (620, 720) qui inclut au moins une couche goulet (664, 764), et la couche goulet (764) comprend au moins une couche goulet LSTM convolutive.

2. Système de traitement de la parole (100, 200) selon la revendication 1, dans lequel le second circuit de réseau neuronal (103, 217) est configuré pour supprimer de surcroît de l'interférence acoustique résiduelle contenue dans la représentation du signal de parole propre (209) estimé.

3. Système de traitement de la parole (100, 200) selon la revendication 1, dans lequel le premier circuit de réseau neuronal (102, 216) comprend une combinaison d'au moins une couche LSTM (511, 512) et d'au moins une couche de propagation avant (510, 513, 514).

4. Système de traitement de la parole (100, 200) selon la revendication 1 ou la revendication 3, dans lequel au moins une couche (510, 513, 514) du premier circuit de réseau neuronal (102, 216) comprend au moins une connexion saute-couche (520, 521).

5. Système de traitement de la parole (100, 200) selon une quelconque revendication précédente, dans lequel le second circuit de réseau neuronal (103, 217) comprend au moins l'une parmi : au moins une couche de mise en commun, au moins une couche de rééchantillonnage, au moins une connexion saute-couche.

6. Système de traitement de la parole (100, 200) selon une quelconque revendication précédente, dans lequel l'entrée est configurée pour recevoir au moins l'un parmi : au moins un signal d'entrée auxiliaire (105) qui comprend de l'interférence acoustique ou une estimée d'interférence acoustique ; au moins un signal de microphone supplémentaire (260).

7. Système de traitement de la parole (100, 200) selon une quelconque revendication précédente, comprenant en outre au moins un circuit de prétraitement couplé à l'entrée et configuré pour fournir le signal de parole d'entrée (101, 201) avec interférence réduite au premier circuit de réseau neuronal (102, 216).

8. Système de traitement de la parole (100, 200) selon une quelconque revendication précédente, dans lequel le premier circuit de réseau neuronal (102, 216) et le second circuit de réseau neuronal (103, 217) sont configurés pour être soumis à un entraînement conjoint des deux circuits combinés.

9. Système de traitement de la parole (100, 200) selon une quelconque revendication précédente, dans lequel le second circuit de réseau neuronal (103) est configuré pour recevoir de surcroît le signal de parole d'entrée (101) comme une entrée additionnelle dans la génération d'une représentation de sortie d'un signal de parole exalté (104).

10. Procédé de traitement de la parole comprenant :

la réception d'un signal de parole d'entrée (101, 201) qui comprend de la parole propre et de l'interférence acoustique ;

la suppression de l'interférence acoustique dans le signal de parole d'entrée (101, 201) par un premier circuit de réseau neuronal (102, 216) ;

la délivrance en sortie (120) d'une représentation d'une estimée d'un signal de parole propre (209) à un second circuit de réseau neuronal (103, 217) ;

la restitution d'au moins une composante de parole de la parole propre dans le signal de parole d'entrée (101, 201) par le second circuit de réseau neuronal (103, 217) ; et

la délivrance en sortie d'un signal de parole reconstruit ;

**caractérisé en ce que** le premier circuit de réseau neuronal (102, 216) comprend une topologie de réseau neuronal récurrent, RNN, et le premier circuit de réseau neuronal (102, 216) comprend au moins une couche de mémoire à court et long terme, LSTM ; et

le second circuit de réseau neuronal (103, 217) comprend une topologie d'encodeur (610, 710)-décodeur (620, 720) qui inclut au moins une couche goulet (664, 764), et la couche goulet (764) comprend au moins une couche goulet LSTM convolutive.

11. Produit programme d'ordinateur tangible non transitoire comprenant un code exécutable mémorisé en son sein pour un traitement de la parole, dans lequel le code est opérationnel, lorsqu'il est exécuté au niveau d'un processeur de la parole, pour :

la réception d'un signal de parole d'entrée (101, 201) qui comprend de la parole propre et de l'interférence acoustique ;

la suppression de l'interférence acoustique dans le signal de parole d'entrée (101, 201) par un premier circuit de réseau neuronal (102, 216) ;

la délivrance en sortie (120) d'une représentation d'une estimée d'un signal de parole propre (209) à un second circuit de réseau neuronal (103, 217) ;

la restitution d'au moins une composante de parole de la parole propre dans le signal de parole d'entrée (101, 201) par le second circuit de réseau neuronal (103, 217) ; et

la délivrance en sortie d'un signal de parole reconstruit ;

**caractérisé en ce que** le premier circuit de réseau neuronal (102, 216) comprend une topologie de réseau neuronal récurrent, RNN, et le premier circuit de réseau neuronal (102, 216) comprend au moins une couche de mémoire à court et long terme, LSTM ; et

le second circuit de réseau neuronal (103, 217) comprend une topologie d'encodeur (610, 710)-décodeur (620, 720) qui inclut au moins une couche goulet (664, 764), et la couche goulet (764) comprend au moins une couche goulet LSTM convolutive.

**FIG. 1**

**FIG. 2**

300

**FIG. 3**

FIG. 4

FIG. 5

**FIG. 6**

**FIG. 7**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Convolutional Neural Networks to Enhance Coded Speech" and "Neural-Network-based Postprocessing for the Enhancement of Transcoded Speech. *arXiv preprint arXiv.-1806.09411,* 2018
- **ZHAO, YAN ; ZHONG-QIU WANG ; DELIANG WANG.** A two-stage algorithm for noisy and reverberant speech enhancement. *Proc. of ICASSP,* 2017
- **HONGXIAO YANG et al.** Low-SNR speech enhancement in driving environment. *2016 16TH INTERNATIONAL SYMPOSIUM ON COMMUNICATIONS ANO INFORMATION TECHNOLOGIES (ISCIT)*
- **SE RIM PARK et al.** *A Fully Convolutional Neural Network for Speech Enhancement*